Europäisches Patentamt

European Patent Office

Office européen des brevets

(11) Publication number: **0 077 824**
**B1**

# EUROPEAN PATENT SPECIFICATION

(45) Date of publication of patent specification: **14.10.87**

(51) Int. Cl.⁴: **H 01 S 3/03**

(21) Application number: **82901771.4**

(22) Date of filing: **03.05.82**

(86) International application number:
**PCT/US82/00572**

(87) International publication number:
**WO 82/03950 11.11.82 Gazette 82/27**

(54) **IMPROVED GAS LASER.**

(30) Priority: **04.05.81 US 259911**
**04.05.81 US 259912**

(43) Date of publication of application:
**04.05.83 Bulletin 83/18**

(45) Publication of the grant of the patent:
**14.10.87 Bulletin 87/42**

(84) Designated Contracting States:
**DE FR GB**

(56) References cited:
**FR-A-2 011 043**
**SU-A- 744 776**
**US-A-2 374 546**
**US-A-3 500 520**
**US-A-3 501 714**
**US-A-3 522 551**
**US-A-3 619 810**
**US-A-3 760 213**
**US-A-3 798 486**

(73) Proprietor: **Coherent, Inc.**
**3210 Porter Drive**
**Palo Alto, Cal. 94303 (US)**

(72) Inventor: **HOBART, James L.**
**25111 Tepa Way**
**Los Altos Hills, CA 94022 (US)**
Inventor: **MEFFERT, Wayne S.**
**14500 Miranda Road**
**Los Altos Hills, CA 94022 (US)**

(74) Representative: **Bernhardt, Klaus et al**
**Radeckestrasse 43**
**D-8000 München 60 (DE)**

Courier Press, Leamington Spa, England.

## Description

The present invention relates to gaseous ion lasers and methods for manufacturing such lasers.

In gaseous ion lasers an electrical discharge is utilized to create an ion plasma on the base of the gas, and the lasing action, i.e. population inversion of certain states of the ions, and stimulated emission, takes place in this plasma. To obtain a plasma capable of this lasing action it is necessary to employ very high current densities, and that is done by confining the discharge path to an elongated narrow region; This elongated narrow region is defined by a bore in some physical structure.

One of the major problems in building such a laser, and in particular the physical structure defining the discharge bore, concerns removing heat generated by the high current density from the central bore region to the outer surface of the bore defining structure.

Traditionally, various structures have been employed. One successful design as represented e.g. by US—A—3 760 213, comprises a tube made from cylindrical blocks of beryllium oxide. These blocks are "glued" together with a glass frit material. Beryllium oxide, or beryllia, is non-conducting and thus heat removal or cooling is feasible by passing a flow of water directly around the outer surface of the berryllium oxide blocks. Heat from the inner bore, i.e. the lasing gas, is carried by conduction from the bore through the beryllia blocks to the water flow. The primary problem with this design is that while berrylia is a good heat conductor at room temperature, as it begins to warm, its heat-conducting properties are dramatically reduced. Thus, this structure has severe power limitations since it can only be allowed to heat up to a certain level before it will crack. In addition, because the water contacts the outer surface and the glass frit material "glue", there tend to be breakdowns after unreasonably short periods of time.

There has been a quite different approach to defining the central bore region of the laser, and to remove the heat therefrom. One example of such a design is described in "Research and Development, Technical Report ECOM-0229-F" of October 1969. Basically this design is characterized in that the discharge tube is defined by thin metal discs which are mounted in a much wider non-conducting tube, cooling being provided by thermal radiation to or through the envelope.

The amount of heat which may be removed this way, is severely limited by the temperature to which the discs may be heated—not only with respect to possible melting of the discs in the region adjacent the discharge path, but also by the temperature the outer periphery is allowed by attain without causing breaks in the insulating envelope which usually is a poor heat conductor, such as quartz which tends to develop cracks when subjected to high temperature differences; such local temperature differences readily develop as usually contact between the metal discs and the quartz envelope is non-uniform because of unavoidable manufacturing tolerances. It is to be noted in this context that the radiation rate is also proportional to the spacing between discs, and that of course means that the discs must be as plane and as thin as possible to maximize the radiation rate, and that of course implies that the periphery of the disc which contacts more or less uniformly the quartz envelope should resemble a knife-edge as closely as possible—every deviation therefrom reduces the heat removal rate. Further, radial heat transfer through the thin discs raises the disc temperature at the outer radius which produces the unexpected result of causing the discs to stick to quartz spacers used in this design with the result that several spacers were broken by on-off cycling during the first hours of operation. Eventually, one of the melted quartz spacers stuck to the envelope and cracked it during cooling.

An again different approach to the problem of defining the discharge bore of a gas ion laser, and to remove heat therefrom, is shown in US—A—3 501 714, and US—A—3 619 810. Basically this design consists in that a plurality of fairly thick discs are disposed in an insulating tube, the discs comprising central apertures defining the discharge bore, the discs being separated by insulating sections, and the discs maintained in alignment by their contact with the vacuum envelope. When these discs are heated, they come into contact with the vacuum envelope and conduct the heat to this envelope, from where it is removed by water cooling. The problem with the original design as in US—A—3 501 714, resides in that the outer periphery of the discs, and the inner circumference of the tube, must be manufactured to extremely narrow tolerances, including an extremely fine surface finish, as otherwise the vacuum envelope would be unevenly heated resulting in cracks and early failure. In addition, the heat conductance of the discs is severely limited because the material of the discs must have a thermal coefficient of expansion less than that of the insulating tube. Suitable materials for that purpose are tantalum, tungsten, molybdenum and graphite, all materials which have limited thermal conductivity. In view of these problems the original design has never been used in a commercial product if any product at all. The disadvantages of the original design have in part been obviated in the design shown in US—A—3 619 810, basically by shrink fitting the vacuum envelope onto graphite discs. Still the difficulty remains that the graphite discs are only expanded into contact, so that only a relatively poor thermal contact is established. So power output was still severely limited because for safety reasons it was not acceptable to reckon with heat removal by conduction through the envelope.

Accordingly, there was still to be solved the problem of providing a gas ion laser having a discharge tube which is very effective in conducting heat away from the discharge path.

With the present invention this problem is attacked in a way which in certain sense is exactly the opposite of the ways considered heretofore: while the prior art as recited above has started with designing the central bore defining the discharge path, and then adding means to remove the heat from the path, with the invention the problem of heat removal is solved first, and then a precision bore is taken care of. Based on this approach the basic idea of the invention may be defined as taking care for a large area, permanent contact between the vacuum envelope, and the bore defining discs. Such a large area, permanent, heat conducting contact allows to obtain two important advantages over all prior art designs, namely on the one hand to dramatically improve heat transfer, and on the other hand spread that heat transfer uniformly over a wide area so that steep thermal gradients within the vacuum envelope are definitely avoided once and for all.

Surprisingly, to define a straight discharge confining bore on this base turned out to be even easier to realize than with the prior art designs because with this approach comparatively low tolerance components, namely vacuum envelope and individual discs, are quite acceptable as with permanent bonding between the discs and the vacuum envelope much greater deviations from specifications can be compensated for, and thus tolerated enabling utilization of standard commercial materials.

There remains but one problem with respect to the designs of the prior art, namely to take care that the bore defining regions of discs maintain their shape inspite of their vicinity to the high current density discharge without impairing the heat conductance from the bore region to the vacuum envelope. In the prior art designs the discs were made of sputter resistant material, such as graphite or molybdenum, but such materials are not so well adapted to the technique of the invention which requires fairly ductile material for the discs on the one hand to facilitate the required bonding to the vacuum envelope and on the other hand to allow differential contraction and expansion of the vacuum envelope on the one side, and the inner parts of the discs on the other side. This problem was solved by taking care that the region surrounding the bore defining apertures of the discs is provided wuth a sputter-resistant material freeing the designer from considering this point when selecting the material for the discs so that he can concentrate on the other criteria for selection, as thermal conductivity under operating conditions, deformability during assembly and operation, and of course ability to bond to the vacuum envelope.

Based on these principle ideas of the invention, the problem indicated above was solved by starting from the laser comprising a gas-confining cylindrical tube made of a relatively thin-walled electrically-insulating material; a plurality of circular members each having a central aperture coaxially aligned with the axis of said tube to define a central discharge path surrounded by a sputter-resistant material; said members providing a heat conduction path from the central aperture of each member to and through the tube wall; means for exciting a gas within said tube; and an optical cavity aligned with said tube as known from US—A—3 501 714, and modifying that design such that said circular members comprise cup-shaped members of a material having high thermal conductivity; the rims of said cup-shaped members are securely bonded to the inside wall of said tube, and only a region surrounding each of said apertures is provided with a sputter-resistant material.

Preferably, the cup-shaped members are made of copper. For bonding, preferably the rims are brazed to the inside wall of said tube.

One possibility for providing the regions surrounding the bore-defining apertures with sputter-resistant material is to provide them with vapor deposited tungsten. Another possibility for that purpose is to attach at the periphery of an opening of each of the cup-shaped members a disc having the central aperture coaxially aligned with the axis of the tube; preferably such discs are made of tungsten.

As has been implicitly mentioned above, prior art designs of lasers comprising thin metal discs for defining the discharge confining bore have not met commercial success. To obtain high power output, gas lasers must be quite long, and then a phenomenon known as "gas pumping" appears. As the discharge of the laser is running, ions will tend to migrate in one direction, and electrons in the other—the discharge being a DC discharge. This results in a pressure gradient in the tube which tends to get more severe as the discharge current, and of course the length of the tube, increase. Eventually, the discharge becomes unstable and will extinguish.

Attempts have therefore been made to provide an internal gas return path in the device by providing holes in the discs, in particular at the periphery thereof, see US—A—3 501 714, and for this same purpose each of said cup-shaped members may have at least one gas return hole therein, located radially outwardly from said aperture. Preferably the size and/or position of the gas return holes varies among the cup-shaped members. Pressure gradients even in very long lasers with high discharge currents can be kept under control, if not effectively removed, when each of said cup-shaped members includes a cylindrical ring gas barrier which is coaxially aligned with the central aperture, which extends almost the whole distance between neighboring cup-shaped members, and which has a radius smaller than the radial distance of the gas return holes. It is theorized that these gas barriers or shields between the hot discharge and the cool walls of the tube provide a cooler gas region surrounding the discharge path allowing rapid pressure equalization over the entire length of the tube so that pressure gradients along the length of the tube cannot develop.

If, in accordance with a preferred embodiment, the anode of the laser is affixed within said tube by means of cup-shaped members so that heat generated by said anode is conducted to and through said tube in effectively the same efficient manner.

For aligning electrodes of an electron gun, it is known from US—A—3 500 520, to assemble a plurality of cup-shaped members within and in contact with a tube, each cup-shaped member having a central aperture generally aligned with the tube axis, said cup-shaped members are exactly aligned by means of a

**0 077 824**

mandrel inserted into said central apertures and said cup-shaped members are permanently secured to said tube. This method without some additional measures, may be suitable for aligning one element with respect to another, but it would be extremely tedious, if not impossible, to align in this way more than a few circular members, not to speak of the plurality necessary to define the discharge path in a laser. Further, this known method requires fairly tightly machined parts, both the tube, and the cup-shaped member. Even for a small number of cup-shaped elements it would probably not work if the tube is manufactured to greatly reduced tolerances, as is more or less unavoidable in ceramic tubes as used in lasers.

Utilizing this technique, one method of fabricating a laser according to the invention is characterized in that in an analogous manner a plurality of cup-shaped members are assembled within and in contact with a tube, each cup-shaped member having a central aperture generally aligned with the tube axis, said cup-shaped members are exactly aligned by means of a mandrel inserted into said central apertures and said cup-shaped members are permanently secured to said tube, and further characterized in that said central apertures are threaded on said mandrel while same is freely floating inside the tube made of electrically insulating material, and said mandrel is tensioned for exact alignment of said cup-shaped members prior to securing same to the tube, the cup rims are expanded into the interior wall of the tube to hold the cup-shaped members in place, and for securing said cup-shaped members are permanently bonded to said tube to ensure good thermal contact. Another method, namely one of fabricating a laser according to the invention in which discs are used to define the central discharge path, is characterized in that, again in a manner analogous to aligning electrodes of an electron gun, a plurality of cup-shaped members are assembled within a tube, each cup-shaped member having an opening generally aligned with the tube axis, and said cup-shaped members are permanently secured to said tube, and is further characterized in that discs of heat resistant material having a bore defining central aperture therein, are inserted within and in contact with each of the cup-shaped members, said discs are threaded on said mandrel, and said mandrel is tensioned for exact alignment of said discs prior to securing same to said cup-shaped members and the latter to the tube, and for securing said discs and said cup-shaped members these are permanently bonded to said cup-shaped members, and said tube, respectively to ensure good thermal contact.

With both possibilities it is preferred that the cup-shaped members are brazed to the electrically insulating tube. Advantageously the brazing material is inserted between the cup-shaped members and the electrically insulating tube prior to brazing. A convenient way for performing the brazing step is to bake the entire tube assembly while the mandrel is in tension; that step preferably occurs with the mandrel vertically oriented. If the cup-shaped members are made of copper and the entire assembly is baked for accomplishing the brazing step, the cup-shaped members may become fully annealed at brazing temperature so that they can yield to strain set up by differential expansion during cooling, but it may be preferable that the cup-shaped members are annealed before assembling within the tube.

An additional manufacturing step may be saved if the anode is affixed within the tube by attaching it to the tube wall by additional cup-shaped members.

In the case discs are to be bonded to the cup-shaped members, preferably a brazing material is provided between the discs and the cup-shaped members; but at least two cup-shaped members may have discs bonded therein before inserting them within the tube to define a bore center line.

Brief description of drawings

Figure 1 is a dissected sectional view of an improved gaseous ion laser in accordance with the present invention.

Figure 2 is a cross sectional view of a cup-member and shield used in the laser of Figure 1.

Figure 3 is a partial cross sectional view of the cup-member of Figure 2 shown within the ceramic tube during assembly.

Figure 4 is a perspective view of the brazing shim shown in Figure 3.

Figure 5 is a plan view of an insertion/expansion tool used to assemble the improved laser of the present invention.

Figure 6 is a partial, cross-sectional view of a part of the tool of Figure 5.

Figure 7 shows a cup member after insertion within the ceramic tube.

Figure 8 shows an arrangement for fabricating the sputter resistant, bore-defining discs.

Figure 9 is a perspective view of a disc prior to assembly.

Figure 10 is a plan view of a brazing ring used to braze the disc of Figure 9 to a cup member.

Figure 11 shows the brazing ring of Figure 10 spot-welded to the disc.

Figure 12 illustrates assembly of the cups and discs within the discharge tube.

Best mode for carrying out the invention

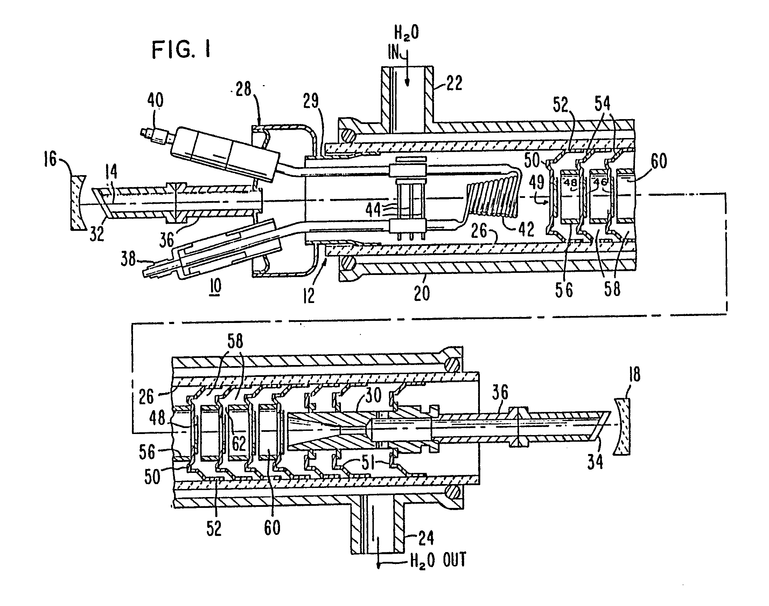

Figure 1 is a dissected sectional view of an improved gaseous ion laser 10 in accordance with the present invention. Laser 10 includes a discharge tube 12, filled with an active gas such as argon or krypton, having an axis 14 which is aligned with mirrors 16 and 18 (shown schematically) forming an optical cavity. A water jacket 20 (also shown schematically) surrounds the discharge tube 12. Water flows into the jacket at inlet 22, absorbs heat conducted out of tube 12, and passes out of exit 24. Not shown is a solenoid, which surrounds the water jacket, which confines the plasma discharge in the well-known manner.

4

Discharge tube 12 includes a thin-walled ceramic tube 26, a cathode assembly 28, an anode 30, and end window assemblies 32 and 34. The latter window assemblies are secured to nickel window support tubes 36 to the cathode assembly 28 and anode 30 respectively.

The cathode assembly 28 includes two lead connectors, 38 and 40 connected to a power supply (not shown) connected with a helical cathode 42. Heat shields 44 are provided to prevent radiation or sputtering from the cathode 42 from entering into the region near window 32.

The plasma discharge path and cross section is determined by apertures or bores 46 in a plurality of discs 48. Discs 48 are preferably made of a sputter-resistant material. In Figure 1 only seven discs are shown since the entire discharge tube 12 is not illustrated. In one actual embodiment more than 50 such discs are employed.

Discs 48 are bonded to at the periphery of openings 49 in thin-walled cup-shaped members 50. These are made of a material, such as copper, which is an excellent heat conductor and which is malleable. The rims 52 of the cup members 50 are permanently bonded to the inside wall of ceramic tube 26. Gas return holes 54 are provided in the cup members 50. Heat generated by the plasma discharge is rapidly conducted through the discs 48 and cup members 50 to and through the tube wall 26 where the heat is carried away by the water coolant.

Coaxially attached or formed with each of the cup members 50 is a cylindrical ring or shield 56. These shields maintain the gas in regions 58 at a comparatively low temperature. Each cylinder 56 is cooled by thermal conduction through cup 50 to tube wall 26. Without cylinder 56, the gas in region 58 is heated by thermal conduction from the discharge. If this happens a lesser number of gas atoms is stored within the tube and a longer time is required after switch-on for the tube to reach equilibrium, since gas would have to move through the gas return holes 54 to the anode and cathode regions before the proper operating pressure was established in the region of the discharge. With cylinder 56 in place, gas need only move from region 60 to region 58 to establish equilibrium operating conditions.

Gas pumping may take place by acceleration of the ions through the gas return holes 54 under the influence of the electric field in the vicinity of these holes. Cylinder 56 minimizes the number of ions in region 58 by providing a surface for recombination 56 and only a small channel 62 through which ions may migrate into region 58.

It is well known to those skilled in the art that when a low pressure discharge takes place in a continuous bore, such that all ions within the discharge are in freefall to the bore walls (theoretically described as the Langmuir-Tonks Model), then gas pumping at low currents is toward the anode and at higher currents toward the cathode. When the confining structure is in a region with no near walls, pumping is always toward the cathode. Thus, by properly choosing the diameter of cylinder 56, it is possible, at the maximum discharge current for which the device is designed, to provide no net pumping. This is an important consideration in longer ion lasers in which it is difficult to provide sufficient bypass in an internal gas return of the normal type.

Since the direction of gas pumping by the discharge can be controlled by the bore and shield 56 configuration and diameter, the tube can be configured to vary for different sections along the tube. Thus, for example, one can have anode pumping in one region and cathode pumping in another. This would then provide a pressure gradient within the tube in order to minimize growth of plasma oscillations while still providing an overall zero or small pressure differential.

If the gas return holes 54 are enlarged much beyond a diameter somewhat less than the bore diameter, the discharge may also travel through the gas return holes. If, however, the diameters and/or positions are varied then the discharge would probably not pass through the bypass holes. This is because to do so would require a rather tortuous path through the structure. This tortuous path would also include sections where the discharge was travelling transverse to the magnetic field rather than parallel to it. This would tend to drive the discharge into the wall and raise the discharge potential per unit length.

Alumina tubes 26 are available from manufacturers such as "Coors" and from "McDaniels" and are standard items having 38,1 mm (1.50") O.D. and a 3,18 mm (0.125") wall thickness. Tolerances on the inside cylinder are approximately ±1,27 mm (±0.05") on the I.D. and 1,52 mm (.06") to 3,05 mm (.12") inch straightness. While it would be straightforward to fabricate a bore tube as shown in Figure 1 using standard self-jigging and auxiliary jigging techniques combined with serial brazing, the large tolerances on I.D. and straightness preclude their use.

It is apparent that certain tubes having small tolerances on inside diameter and straightness would be very expensive. The following techniques can be used to fabricate the ion laser bore tube to Figure 1 using available "standard toleranced" ceramic tubes.

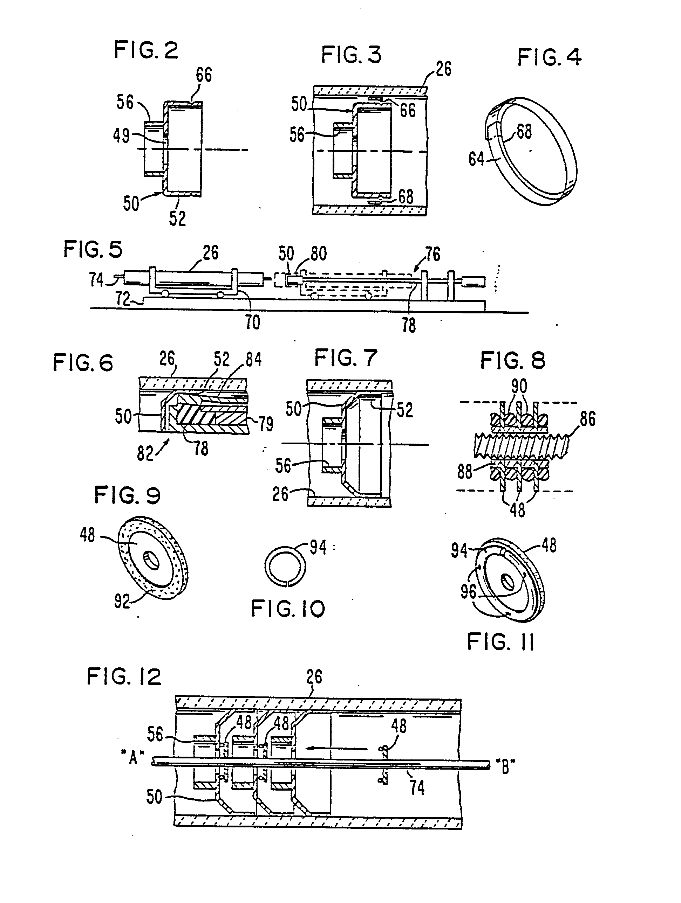

The copper cup members 50 are formed from OFHC copper sheet by "drawing" as shown in Figure 2. Afterwards the shield 56 is bonded, such as by brazing, to the cup 50.

A brazing shim 64 (Figure 4) is placed between the copper cup 50 and ceramic tube 26 as shown in Figure 3. One suitable brazing material "Ticusil". This material is a copper-silver eutectic with a small percentage of titanium added which has been used in the past for making ceramic to metal seals under what is known as the active metal process. In this process the titanium reduces the ceramic material to allow a ceramic-to-metal seal in one operation. This obviates the necessity of prior metallization of the ceramic through, for example, the well-known moly-manganese or other processes.

It has been found desirable to provide a circumferentially extending grove 66 around the surface of the

5

cup 50 rim. This grove accepts a lip 68 formed in the brazing shim. The purpose of the lip/grove combination is to prevent slippage of the shim during the brazing operation. This insures a clean copper/ceramic contact at the very edge of the cup rim.

Figures 5—7 illustrate how the individual cup members 50 are expanded against the inside wall of ceramic tube 26 to form a secure mechanical fit prior to brazing. The ceramic tube 26 is supported on a carriage 70 which can be moved in a parallel fashion along rail 72. Within the tube 26 is a floating mandrel 74. Fixed parallel to the rail 72 is an expansion tool 76 which comprises an elongated portion 78 and an expansion head 80. A copper cup 50 is first inserted over the expansion head 80. Then carriage 70 is moved toward expansion tool 76 as indicated by the dotted representation centering the cup 50 within the tube 26.

Suitable means, such as a hydraulic pump (not shown) drives a piston 79 which compresses an elastomer ring (Figure 6), otherwise confined, outwardly against a plurality of fingers 84 circumferentially located within the cup member 50. These fingers deform and force the rim 52 firmly in contact with the ceramic tube 26. In this position (Figure 7), it is ready for a later brazing operation.

The copper cups 50 are annealed prior to insertion within the tube 26 to minimize the force required to expand them and to allow them to be better forced into conformance with the ceramic tube 26. This is desirable because of the slightly out-of-round inside diameter of the tube.

Plating of discs 48 prior to brazing is now described. First, tungsten discs 48 are threaded onto a mandrel 86 spaced by metal spacers 88 inside O-rings 90 (Figure 8). This assembly is then nickel plated, 13—25 μm (0.0005"—0.0010") thick. The O-rings 90 mask the inside areas of the discs and the metal spacers 88 provide electrical contact to the discs. Masking prevents subsequent wetting of the surface by the brazing material. A fabricated disc, having a nickel-coated outer area 92, is illustrated in Figure 9.

After plating, the discs 48 are fired at 900°C for 10 minutes in hydrogen. This anneals the nickel plating and improves the nickel-tungsten bond. A braze ring 94, as shown in Figure 10, is then formed from 0,76 mm (.030") dia Nicusil-3 wire, available from Western Gold and Platinum Co. The braze ring is next spot welded at 96 to one face of a tungsten disc 48 as shown in Figure 11.

The tube assembly sequence is now explained. First, a cup 50 is placed on the expansion tool 76 and the tool expanded enough to hold the cup 50 in place. The braze foil ring 64 is placed around the cup 50 and the carriage/tube is moved until the cup is at the proper location inside the tube 26. The tungsten mandrel 74 floats freely inside the tube 26 and moves along with it on the carriage 70, slipping in and out of the hole in the expansion tool. The cup 50 is then expanded, the pressure on elastomer 78 relieved, and then the carriage/tube moved off the expansion tool. A tungsten disc/braze ring assembly is then slipped over the mandrel as shown in Figure 12. The process is then repeated, alternately installing a cup 50 and a disc 48, until the bore is complete.

In actual practice the first and last tungsten discs 48 which match the mandrel diameter can be previously brazed to their respective copper cups 50 using a higher temperature brazing alloy. These two discs then establish the bore centerline.

Prior to brazing, the tube/bore assembly with mandrel is placed vertically in a vacuum oven with end "B" (Figure 12) upward. The mandrel 74 is secured at one end and stretched taut by pulling on the opposite end throughout the brazing cycle. This insures that all intermediate discs 48 are aligned to form a straight bore after brazing.

A "transition" section, consisting of one or more sections having progressively larger disc hole 49 sizes, is provided at one or both ends. In this case the first and last "mandrel size" discs and all larger size discs outward from these are pre-brazed.

As the assembly is heated the copper tends to expand more than the ceramic because of the difference in their thermal expansion coefficients. This results in the cups 50 being very tightly fitted in the tube 26 when brazing temperature is reached. The copper becomes fully annealed at brazing temperature which is desirable so that it can yield to the strain set up by differential thermal expansion during cooling and not pull away from the ceramic at the brazed joint.

The process of aligning these "floating" discs on a taut straight mandrel is very important to being able to fabricate very straight bores within low tolerance ceramic tubes. "Very straight bores" may be taken as those with overall straightness of less than 10% of the bore diameter.

The cathode assembly 28 is encased in a copper enclosure 29 which must form an air-tight seal with tube 26. The same expansion/brazing technique is used to form this connection. On the interior of the tube, the braze is required for good heat conductivity between the cup and the tube wall. On the ends, where a vacuum tight joint is also required, after expansion, the cup may be pressed into even more intimate contact with the wall, with a chisel-shaped tool so that the cup will conform to the small irregularities of the tube wall. This results in a better vacuum seal.

The same fabrication technique is used to mount the anode 30. The resulting configuration provides important advantages. The anode 30 is mounted by copper cups 51 similar in design to cups 50. As a result, heat generated by the anode is conducted out of the tube through the cups 51. Thus, the anodes are cooled without any electrical contact with the coolant water. The anode is electrically isolated from the rest of the tube avoiding the use of insulating varnish as in U.S. Patent No. 3,501,714, between the anode and the tube 26. Also, a lead wire (not shown) can be brought directly out of the tube without having to go through the tube 26 wall.

Another technique for providing high sputter-resistant material is to vapor deposit tungsten onto the central region of the copper cups 50 by well known techniques. In this case, of course, there is not the same flexibility of having the tungsten discs 48 slide around to center themselves on the mandrel. However a straight bore can still be achieved by using the insertion tool 76 with a small pin to hold the tungsten in the center of the tube as determined by an external insertion machine reference. Then the copper cups are expanded to the walls of the tube so that the copper cup rims conform to the tube wall while keeping the tungsten-plated center portion of the copper aligned.

Another technique for attaching the copper cups 50 to the alumina is as follows. When one is expanded into contact with the alumina tube 26 wall, which has been premetallized with Mo Mn or other techniques, the copper cups can be pulse-soldered in place by means of a pulsed induction heating apparatus which heats the cups 50 and the circumferential metallization of the ceramic and thus melts the solder. The cooling of the alumina wall after the pulses terminate cools the solder below its melting point so that the tool can be withdrawn immediately with the copper cup soldered in place. This technique is desirable if permanent magnets are used inside a tube, since it is a method of attaching the copper cups at low temperature where the magnet does not de-magnetize.

Since the tube operates at relatively low temperature, the interuption of water cooling does not result in boiling of the water remaining in the cooling jacket. Calculation shows that the stored heat in the tube is insufficient to even raise the bore tube 26 to the boiling point of water. Air-cooled tubes are also feasible with this laser design. Cooling fins are attached directly to the external surface of the alumina tube 26.

In one actual embodiment, the following dimensions were used:

| cup 50 | thickness | 0,76 mm (0.030") |
| | dia. of opening 49 | 8,1 mm (.31") |
| | O.D. | 28,6 mm (1.125") |
| brazing ring 64 | thickness | 51 μm (.002") |
| disc 48 | bore 46 dia. | 2,79 mm (.110") |
| | O.D. | 12,7 mm (.50") |
| | thickness | 0.259 mm (.010") |
| shield 56 | O.D. | 21,4 mm (3/4") |
| | I.D. | 17,8 mm (5/8") |

**Claims**

1. Laser comprising:
a gas-confining cylindrical tube (26) made of a relatively thin-walled electrically-insulating material;
a plurality of circular members (50) each having a central aperture (46) coaxially aligned with the axis of said tube (26) to define a central discharge path surrounded by a sputter-resistant material;
said members (50) providing a heat conduction path from the central aperture (46) of each member (50) to and through the tube wall;
means (28, 30) for exciting a gas within said tube (26); and
an optical cavity (16, 18) aligned with said tube (26), characterized in that
said circular members (50) comprise cup-shaped members of a material having high thermal conductivity; the rims (52) of said cup-shaped members (50) are securely bonded to the inside wall of said tube (26), and only a region surrounding each of said apertures (46) is provided with a sputter-resistant material (48; 92).

2. Laser as in Claim 1, characterized in that said cup-shaped members (50) are made of copper.

3. Laser as in Claim 1 or 2, characterized in that said rims (52) are brazed to the inside wall of said tube.

4. Laser as in Claim 1, 2 or 3, characterized in that the region surrounding each of said apertures (46) of said members (50) is provided with vapor deposited tungsten.

5. Laser as in any of Claims 1 to 4, characterized in that a disc (48) having said central aperture (46) coaxially aligned with the axis of said tube (26) is attached at the periphery of an opening (49) of each of the cup-shaped members (50).

6. Laser as in Claim 5, characterized in that said discs (48) are made of tungsten.

7. Laser as in any of Claims 1 to 6, characterized in that each of said cup-shaped members (50) has at least one gas return hole (54) therein, located radially outwardly from said aperture (46).

8. Laser as in Claim 7, characterized in that the size and/or position of the gas return holes (54) varies among the cup-shaped members (50).

9. Laser as in Claim 7 or 8, characterized in that each of said cup-shaped members (50) includes a cylindrical ring (56) gas barrier which is coaxially aligned with the central aperture (46), which extends almost the whole distance between neighboring cup-shaped members (50), and which has a radius smaller than the radial distance of the gas return holes.

10. Laser as in any of Claims 1 to 9, characterized in that said anode (30) is affixed within said tube (26) by means of additional cup-shaped members (51) so that heat generated by said anode (30) is conducted to and through said tube (26).

11. Method of fabricating a laser according to any of the preceding claims, characterized in that in a manner known for aligning electrodes of an electron gun, a plurality of cup-shaped members (50) are assembled within and in contact with a tube (26), each cup-shaped member (50) having a central aperture (46) generally aligned with the tube axis (14), said cup-shaped members (50) are exactly aligned by means of a mandrel (74) inserted into said central apertures (46) and said cup-shaped members are permanently secured to said tube (26), and further characterized in that said central apertures (46) are threaded on said mandrel (74) while same is freely floating inside the tube (26) made of electrically insulating material, and said mandrel (74) is tensioned for exact alignment of said cup-shaped members prior to securing same to the tube (26), the cup rims (52) are expanded into the interior wall of the tube (26) to hold the cup-shaped members (50) in place, and for securing said cup-shaped members (50) are permanently bonded to said tube (26) to ensure good thermal contact.

12. Method of fabricating a laser according to any of the Claims 5 to 10, characterized in that, in a manner known for aligning electrodes of an electron gun, a plurality of cup-shaped members (50) are assembled within a tube (26), each cup-shaped member (50) having an opening (49) generally aligned with the tube axis (14), and said cup-shaped members are permanently secured to said tube (26), and further characterized in that discs (48) of heat resistant material having a bore defining central aperture (46) therein, are inserted within and in contact with each of the cup-shaped members (50) said discs (48) are threaded on said mandrel (74) (Figure 12), and said mandrel (74) is tensioned for exact alignment of said discs (48) prior to securing same to said cup-shaped members (50) and the latter to the tube (26), and for securing said discs (48) and said cup-shaped members (50) these are permanently bonded to said cup-shaped members (50), and said tube (26), respectively, to ensure good thermal contact.

13. Method of Claim 11 or 12, characterized in that the cup-shaped members (50) are brazed to the electrically insulating tube (26).

14. Method of Claim 13, characterized in that brazing material is inserted between the cup-shaped members (50) and the electrically insulating tube (26) prior to brazing.

15. Method of Claim 13 or 14, characterized in that the brazing step is accomplished by baking the entire tube assembly (12) while the mandrel (74) is in tension.

16. Method of Claim 15, characterized in that the baking step occurs with the mandrel (74) vertically oriented.

17. Method of any of Claims 11 to 16, characterized in that the cup-shaped members (50) are annealed before assembling within the tube (26).

18. Method of any of Claims 11 to 17, characterized in that the anode (30) is affixed within the tube (26) by attaching it to the tube wall by additional cup-shaped members (51).

19. Method of any of Claims 12 to 18, characterized in that a brazing material (94) is provided between the discs (48) and the cup-shaped members (50).

20. Method of Claim 19, characterized in that at least two cup-shaped members (50) have discs (48) bonded therein before inserting them within the tube (26) to define a bore center line.

**Patentansprüche**

1. Laser, bestehend aus:

einem Gas einschließenden zylindrischen Rohr (26), das aus einem relativ dünnwandigen, elektrisch isolierenden Werkstoff hergestellt ist;

mehreren kreisförmigen Elementen (50), die jedes eine zentral Öffnung (46) haben, die koaxial mit der Achse des Rohres (26) ausgefluchtet ist, um einen zentralen Entladungsweg zu definieren, der von einem gegen Sprühen widerstandsfähigen Werkstoff umgeben ist;

wobei die Elemente (50) einen Wärmeleitweg von der zentralen Öffnung (46) jedes Elementes (50) zu der und durch die Rohrwandung verfügbar machen;

Mitteln (28, 30) zur Anregung eines Gases innerhalb des Rohres (26); und

einem optischen Hohlraum (16, 18) der mit dem Rohr (26) ausgefluchtet ist, dadurch gekennzeichnet, daß

die kreisförmigen Elemente (50) aus schlüsselförmigen Elementen aus einem Werkstoff bestehen, der eine hohe thermische Leitfähigkeit hat; die Ränder (52) der schüsselförmigen Elemente (50) fest an die Innenwand des Rohres (26) gebondet sind, und nur ein jede der Öffnungen (46) umgebender Bereich mit einem gegen Sprühen widerstandfähigen Werkstoff (48; 92) versehen ist.

2. Laser nach Anspruch 1, dadurch gekennzeichnet, daß die schüsselförmigen Elemente (50) aus Kupfer hergestellt sind.

3. Laser nach Anspruch 1 oder 2, dadurch gekennzeichnet, daß die Ränder (52) an die Innenwand des Rohres gelötet sind.

4. Laser nach Anspruch 1, 2 oder 3, dadurch gekennzeichnet, daß der jede der Öffnungen (46) der Elemente (50) umgebende Bereich mit aus dem Dampf niedergeschlagenen Wolfram versehen ist.

5. Laser nach einem der Ansprüche 1 bis 4, dadurch gekennzeichnet, daß eine Platte (48), die die zentrale Öffnung (46) koaxial mit der Achse des Rohres (26) hat, am Umfang einer Öffnung (49) an jedem der schüsselförmigen Elemente (50) befestigt ist.

6. Laser nach Anspruch 5, dadurch gekennzeichnet, daß die Platten (48) aus Wolfram hergestellt sind.

7. Laser nach einem der Ansprüche 1 bis 6, dadurch gekennzeichnet, daß jedes der schüsselförmigen Elemente (50) wenigstens ein Gasrückführloch (54) aufweist, das radial auswärts von der Öffnung (46) lokalisiert ist.

8. Laser nach Anspruch 7, dadurch gekennzeichnet, daß die Größe und/oder Position der Gasrückführlöcher (54) zwischen den schüsselförmigen Elementen (50) varriert.

9. Laser nach Anspruch 7 oder 8, dadurch gekennzeichnet, daß jedes der schüsselförmigen Elemente (50) einen zylindrischen Ring (56) als Gassperre aufweist, der koaxial mit der zentralen Öffnung (46) ausgefluchtet ist, der sich fast über die gesamte Distanz zwischen benachbarten schüsselförmigen Elementen (50) erstreckt, und der einen Radius kleiner als der radiale Abstand der Gasrücklöcher hat.

10. Laser nach einem der Ansprüche 1 bis 9, dadurch gekennzeichnet, daß die Anode (30) innerhalb des Rohrs (26) mittels zusätzlicher schüsselförmiger Elemente (51) befestigt ist, so daß von der Anode (30) erzeugte Wärme zu dem und durch das Rohr (26) geleitet wird.

11. Verfahren zur Herstellung eines Lasers nach einem der vorangegangenen Ansprüche, dadurch gekennzeichnet, daß in zum Ausfluchten von Elektroden eines Elektronenstrahlerzeugungssystems bekannter Weise mehrere schüsselförmige Elemente (50) innerhalb und in Kontakt mit einem Rohr (26) montiert werden, wobei jedes schüsselförmige Elemente (50) eine zentrale Öffnung (46) hat, die allgemein mit der Rohrachse (14) ausgefluchtet ist, die schüsselförmigen Elemente (50) mittels eines Dorns (74), der in die zentralen Öffnungen (46) eingesetzt wird, exakt ausgefluchtet werden, und die schüsselförmigen Elemente permanent am Rohr (26) befestigt werden, und weiter dadurch gekennzeichnet, daß die zentralen Öffnungen (46) auf den Dorn (74) gefädelt werden, während dieser innerhalb des aus elektrisch isolierendem Werkstoff herstellten Rohres (26) frei beweglich ist, und der Dorn (74) zur exakten Ausfluchtung der schüsselförmigen Elemente vor deren Befestigung am Rohr (26) gespannt wird, die Ränder (52) der Schüsseln in die Innenwand des Rohres (26) expandiert werden, um die schüsselförmigen Elemente (50) an Ort und Stelle zu halten, und zur Befestigung die schüsselförmigen Elemente (50) permanent an das Rohr (26) gebondet werden, um guten Wärmekontakt zu gewährleisten.

12. Verfahren zur Herstellung eines Lasers nach einem der Ansprüche 5 bis 10, dadurch gekennzeichnet, daß in zur Ausfluchtung von Elektroden eines Elektronenstrahlerzeugersystems bekannter Weise mehrere schüsselförmige Elemente (50) innerhalb eines Rohres (26) montiert werden, wobei jedes schüsselförmige Element (50) eine Öffnung (49) hat, die allgemein mit der Rohrachse (14) ausgefluchtet ist, und die schüsselförmigen Elemente permanent am Rohr (26) befestigt werden, und weiter dadurch gekennzeichnet, daß Platten (48) aus wärmebeständigem Werkstoff mit einer eine zentrale Öffnung (46) definierende Bohrung in jedes der schüsselförmigen Elemente (50) und in Kontakt damit eingesetzt werden, die Platten (48) auf den Dorn (74) (Figur 12) gefädelt werden, und der Dorn (74) zur exakten Ausfluchtung der Platten (48) gespannt wird, ehe diese an den schüsselförmigen Elementen (50) und letztere am Rohr (26) befestigt werden, und zum Befestigen der Platten (48) und der schüsselförmigen Elemente (50) diese an die schüsselförmigen Elemente (50) bzw. das Rohr (26) gebondet werden, um guten thermischen Kontakt zu gewährleisten.

13. Verfahren nach Anspruch 11 oder 12, dadurch gekennzeichnet, daß die schüsselförmigen Elemente (50) an das elektrisch isolierende Rohr (26) gelötet werden.

14. Verfahren nach Anspruch 13, dadurch gekennzeichnet, daß Lot zwischen die schüsselförmigen Elemente (50) und das elektrisch isolierende Rohr vor dem Löten eingesetzt wird.

15. Verfahren nach Anspruch 13 oder 14, dadurch gekennzeichnet, daß der Lötschritt dadurch verwirklicht wird, daß die gesamte Rohrmontage (12) erwärmt wird, während der Dorn (74) gespannt ist.

16. Verfahren nach Anspruch 15, dadurch gekennzeichnet, daß der Erwärmungsschritt mit vertikal orientiertem Dorn (74) erfolgt.

17. Verfahren nach einem der Ansprüche 11 bis 16, dadurch gekennzeichnet, daß die schüsselförmigen Elemente (50) vor deren Montage innerhalb des Rohres (26) geglüht werden.

18. Verfahren nach einem der Ansprüche 11 bis 17, dadurch gekennzeichnet, daß die Anode (30) innerhalb des Rohres (26) befestigt wird, indem sie mit zusätzlichen schüsselförmigen Elementen (51) an der Rohrwand befestigt wird.

19. Verfahren nach einem der Ansprüche 12 bis 18, dadurch gekennzeichnet, daß zwischen den Platten (48) un den sychüsselförmigen Elementen (50) Lot (94) vorgesehen wird.

20. Verfahren nach Anspruch 19, dadurch gekennzeichnet, daß in wenigstens zwei schüsselförmige Elemente (50) Platten (48) gebondet sind, ehe sie in das Rohr (26) eingesetzt werden, um eine Bohrungsmittellinie zu definieren.

**Revendications**

1. Laser comprenant:
une tube cylindrique (26) de confinement de gaz, formé d'un matériau isolant de l'électricité et ayant des parois relativement minces,
plusieurs organes circulaires (50) ayant chacun une ouverture centrale (46) alignée coaxialement sur

# 0 077 824

l'axe du tube (26) afin qu'un trajet central de décharge, entouré par un matériau résistant à la pulvérisation, soit délimité,

lesdits organes (50) formant un trajet conducteur de la chaleur à partir de l'ouverture centrale (46) de chaque organe (50) et vers la paroi du tube et à travers celle-ci,

un dispositif (28, 30) d'excitation d'un gaz à l'intérieur du tube (26), et

une cavité optique (16, 18) alignée sur le tube (26), caractérisé en ce que:

les organes circulaires (50) sont des organes en forme de coupelle constitués d'un matériau ayant une conductibilité thermique élevée, les rebords (52) des organes (50) en forme de coupelle sont liés fermement à la paroi interne du tube (26), et seule une région entourant chacune des ouvertures (46) porte un matériau résistant à la pulvérisation (48; 92).

2. Laser selon la revendication 1, caractérisé en ce que les organes en forme de coupelle (50) sont constitués de cuivre.

3. Laser selon l'une des revendications 1 et 2, caractérisé en ce que les rebords (52) sont brasés sur la paroi interne du tube.

4. Laser selon l'une quelconque des revendications 1, 2 et 3, caractérisé en ce que la région entourant chacune des ouvertures (46) desdits organes (50) a du tungstène déposé en phase vapeur.

5. Laser selon l'une quelconque des revendications 1 à 4, caractérisé en ce qu'un disque (48) ayant une ouverture centrale (46) alignée coaxialement sur l'axe du tube (26) est fixé à la périphérie d'une ouverture (49) de chacun des organes en forme de coupelle (50).

6. Laser selon la revendication 5, caractérisé en ce que les disques (48) sont formés de tungstène.

7. Laser selon l'une quelconque des revendications 1 à 6, caractérisé en ce que chacune des organes en forme de coupelle (50) a au moins un trou (54) de retour de gaz, placé radialement à l'extérieur par rapport à l'ouverture (46).

8. Laser selon la revendication 7, caractérisé en ce que la dimension et/ou la position des trous (54) de retour de gaz varie parmi les organes en forme de coupelle (50).

9. Laser selon l'une des revendications 7 et 8, caractérisé en ce que chacun des organes en forme de coupelle (50) a une barrière de protection contre les gaz sous forme d'une bague cylindrique (56) alignée coaxialement sur l'ouverture centrale (46), placée sur presque toute la distance comprise entre les organes voisins en forme de coupelle (50), et ayant un rayon inférieur à la distance radiale des trous de retour de gaz.

10. Laser selon l'une quelconque des revendications 1 à 9, caractérisé en ce que l'anode (30) est fixée dans le tube (26) à l'aide d'organes supplémentaires en forme de coupelle (51) afin que la chaleur dégagée par l'anode (30) soit conduite vers le tube (26) et à travers celui-ci.

11. Procédé de fabrication d'un laser selon l'une quelconque des revendications précédentes, caractérisé en ce que, d'une manière connue pour l'alignement d'électrodes d'un canon électronique, plusieurs organes en forme de coupelle (50) sont assemblés dans un tube (26) et au contact de celui-ci, chaque organe en forme de coupelle (50) ayant une ouverture centrale (46) alignée de façon générale sur l'axe du tube (14), les organes en forme de coupelle (50) sont alignés exactement à l'aide d'un mandrin (74) introduit dans les ouvertures centrales (46), et les organes en forme de coupelle sont fixés de manière permanente au tube (26), et caractérisé en outre en ce que les ouvertures centrales (46) sont enfilées sur le mandrin (74) alors que celui-ci flotte librement à l'intérieur du tube (26) formé d'un matériau isolant de l'électricité, et le mandrin (74) est soumis à une tension assurant l'alignement exact des organes en forme de coupelle avant leur fixation au tube (26), les rebords (52) des coupelles sont dilatés contre la paroi interne du tube (26) afin que les organes en forme de coupelle (50) soient maintenus en place, et les organes en forme de coupelle (50) sont liés de manière permanente au tube (26) d'une manière qui assure un bon contact thermique, afin qu'ils soient fixés.

12. Procédé de fabrication d'un laser selon l'une quelconque des revendications 5 à 10, caractérisé en ce que, d'une manière connue pour l'alignement des électrodes d'un canon électronique, plusieurs organes en forme de coupelle (50) sont assemblés dans un tube (26), chaque organe en forme de coupelle (50) ayant une ouverture (49) alignée de façon générale sur l'axe du tube (14), et les organes en forme de coupelle sont fixés de manière permanente au tube (26), et caractérisé en outre en ce que des disques (48) d'un matériau résistant à la chaleur et ayant une ouverture centrale (46) délimitant un trou, sont introduits dans chaque organe en forme de coupelle (50) et au contact d'un tel organe, les disques (48) sont enfilés sur le mandrin (74) (figure 12), et le mandrin (74) est soumis à une force de tension assurant l'alignement exact des disques (48) avant leur fixation aux organes (50) en forme de coupelle et de ces derniers sur le tube (26), et les disques (48) et les organes (50) en forme de coupelle sont liés de façon permanente aux organes en forme de coupelle (50) et au tube (26) respectivement afin qu'ils assurent un bon contact thermique et qu'ils soient fixés mutuellement.

13. Procédé selon l'une des revendications 11 et 12, caractérisé en ce que les organes en forme de coupelle (50) sont brasés sur le tube isolant de l'électricité (26).

14. Procédé selon la revendication 13, caractérisé en ce que le matériau de brasage est introduit entre les organes en forme de coupelle (50) et le tube isolant de l'électricité (26) avant le brasage.

15. Procédé selon l'une des revendications 13 et 14, caractérisé en ce que l'étape de brasage est réalisée par cuisson de la totalité de l'ensemble (12) comprenant le tube alors que le mandrin (74) est soumis à des forces de traction.

16. Procédé selon la revendication 15, caractérisé en ce que l'étape de cuisson est réalisée alors que le mandrin (74) a une orientation verticale.

17. Procédé selon l'une quelconque des revendications 11 à 16, caractérisé en ce que les organes (50) en forme de coupelle sont recuits avant montage dans le tube (26).

18. Procédé selon l'une quelconque des revendications 11 à 17, caractérisé en ce que l'anode (30) est fixée dans le tube (26) par fixation à la paroi du tube par des organes supplémentaires en forme de coupelle (51).

19. Procédé selon l'une quelconque des revendications 12 à 18, caractérisé en ce que le matériau de brasage (94) est placé entre les disques (48) et les organes (50) en forme de coupelle.

20. Procédé selon la revendication 19, caractérisé en ce que deux organes en forme de coupelle au moins (50) ont des disques (48) qui sont liés à l'intérieur avant introduction dans le tube (26) afin qu'un axe central du trou soit délimité.

FIG. I

H₂0
IN

0 077 824

FIG. 2

FIG. 3

FIG. 4

FIG. 5

FIG. 6

FIG. 7

FIG. 8

FIG. 9

FIG. 10

FIG. 11

FIG. 12

2